# EUROPEAN PATENT APPLICATION

(11) **EP 2 199 651 A1**
(43) Date of publication of application: **23.06.2010**
(21) Application number: 08837839.3
(22) Date of filing: 28.09.2008
(51) Int. Cl.: F16L 11/10

(54) **HIGH PRESSURE TUBE FOR HYDRAULIC TRANSMISSION**

(30) Priority: 12.10.2007 CN 200710046969
(71) Applicant: Zhang, Dengfeng, Shanghai 201108 (CN)
(72) Inventor: Zhang, Dengfeng, Shanghai 201108 (CN)
(74) Representative: Kay, Ross Marcel
(86) International application number: PCT/CN2008/001674
(87) International publication number: WO 2009/046630

(57) **Abstract**

A high pressure tube for hydraulic transmission including silicon rubber tube, braid layer and protection layer, where braid layer is placed between silicon rubber tube and protection layer, wherein the silicon rubber tube is made of a silicon rubber material KE581U; the braid layer is composed of terylene and the protection layer is made of a silicone resin KR-166. The tube is aging resistant, corrosion resistant, high temperature resistant, soft, low shrinkage ratio and environment-friendly. The tube can be used in hydraulic transmission system with extremely high requirement of pressure of about 10 MPa, when the temperature is 20 centigrade, and the bursting pressure of the tube is 15.5 MPa.

## Description

### TECHNICAL DOMAIN

This invention relates to a high pressure tube for hydraulic transmission, which can be used as tube for hydraulic transmission equipped in special equipment and instrumentation such as medical instrument, electric appliance, aviation and spaceflight utilization, automobile etc. it belongs to the technical aspect of tube for hydraulic transmission .

### TECHNICAL BACKGROUD

The high pressure tube for hydraulic transmission equipped in special equipment and instrumentation such as medical instrument, electric appliance, aviation and spaceflight utilization, automobile etc, consists of the silicon rubber tube, the braided layer and the protective layer. A common fiber layer is fixed outside the silicon rubber tube and a silicon rubber wrapped around the fiber layer, the protective layer of the said silicon rubber tube is of common silicon rubber material, the said braided layer is made of braided glass fiber, the shortage is that the minimum explosive pressure thereof can't be higher than 5MPa at temperature of 20°C.

### INVENTION CONTENT

This invention is aimed at providing a high pressure tube for hydraulic transmission with features of anti-ageing, anti-corrosion, withstanding high temperature, pliability, low shrinking ratio and environmental friendly, as well as withstanding pressure of 10MPa.

To fulfill above-mentioned purpose the technical scheme of this invention is to provide a high pressure tube for hydraulic transmission consisting of the silicon rubber tube, the braided fiber layer and the protective layer, the braidedfiber layer is fixed between the silicon rubber tube and the protective layer, which is **characterized in that** the material of the said silicon rubber tube is silicon rubber material KE581 U; the said braided layer is made by the knitting of terylene wire; the material of the said protective layer is silicon resin KR-166.

It is selected in this invention that the enforced braided skeleton is made of a particular high strength fiber material, which outside is covered by the liquid resin causing the features of silicon rubber with anti-ageing, anti-corrosion, withstanding high temperature, pliability and low shrinking ratio, forming a seamless combination with this special fiber of high strength, additionally, it is anchored and protected by covered liquid resin, and results in the sufficient developed property of the product as well as possess the ability of withstanding ultra high pressure, besides, the tube is not thicker than that of the regular product, thus it can substitute the tube made of metal or PVC without the property of pliability and the tube made of rubber without the property of anti-aging and withstanding high temperature in some cases.

The advantages summed up for this invention are in features of anti-ageing, anti-corrosion, withstanding high temperature, pliability, low shrinking ratio and environmental friendly, the said tube can be used for hydraulic transmission system in cases of very high pressure, the minimum explosive pressure reaches 15.5MPa and the pressure under normal operation is 10MPa at temperature of 20°C.

### Description of sketches

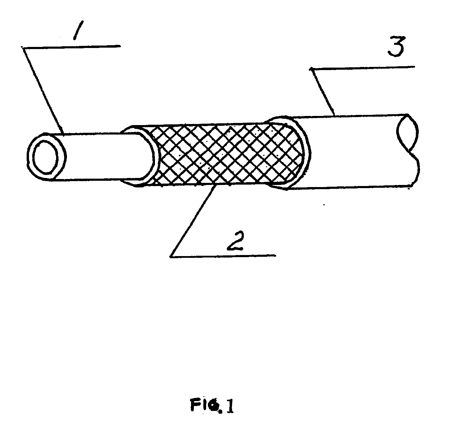

Fig.1 The sketch showing structure of a high pressure tube for hydraulic transmission

### Manner of Undertaking

A preferred embodiment of the invention is illustrated in the accompanying drawing in which:

### Example of undertaking:

As shown in Fig.1, it is the sketch showing structure of a high pressure tube for hydraulic transmission, the said high pressure tube for hydraulic transmission consists of the silicon rubber tube1, the braidedlayer 2 and the protective layer 3, the braided fiber layer 2 is fixed between the silicon rubber tube1 and the protective layer 3, the material of the said silicon rubber tube 1 is the purchased silicon rubber material KE581 U, the material of the said braided fiber layer 2 is terylene wire, the material of the said protective layer 3 is the purchased silicon resin KR-166.

The fabrication technology is described as follows:
To select silicon rubber material KE581 U as a solid silicon rubber which is put into the mixing rolls for mixing, the duration of mixture is 15-25 min, and squeezed out as the common silicon rubber tube in a squeezing machine at temperature of 180°C - 250°C, with the squeezing speed of 3 - 5m/min, then the terylene wire has been braided on the common silicon rubber tube by the braiding machine, the speed of knitting is about 20 m/hr, eventually, the liquid resin KR-166 is covered on the surface thereof by means of coating, the coating temperature is 200°C - 260°C, with the speed of 40-60m/hr, consequently the isolation bushing tube is fabricated completely.

## Claims

1. A high pressure tube for hydraulic transmission consists of the silicon rubber tube(1), the braided fiber layer (2) and the protective layer (3), The braided fiber layer (2) is fixed between the silicon rubber tube(1) and the protective layer (3), which is **characterized in that** the material of the said silicon rubber tube(1) is silicon rubber material KE581 U; the said braided layer (2) is made by the knitting of terylene wire; the material of the said protective layer (3) is silicon resin KR-166.
